# EUROPÄISCHE PATENTANMELDUNG

(11) **EP 1 619 772 A2**
(43) Veröffentlichungstag der Anmeldung: **25.01.2006**
(21) Anmeldenummer: 05014728.9
(22) Anmeldetag: 07.07.2005
(51) Int. Cl.: H02K 5/00

(54) **Anordnung mit einem Elektromotor**

(30) Priorität: 21.07.2004 DE 102004036887
(71) Anmelder: ebm-papst St. Georgen GmbH & Co. KG, 78112 St. Georgen (DE)
(72) Erfinder: Hahn, Alexander, 88605 Sauldorf (Ortsteil Boll) (DE); Rappenecker, Hermann, 78147 Vöhrenbach (DE)
(74) Vertreter: Raible, Hans

(57) **Zusammenfassung**

Es handelt sich um eine Anordnung mit einem Elektromotor nach Art eines Klein- oder Kleinstmotors. Dieser Motor (20) hat einen Stator (56), einen Rotor (24) und einen dem Motor zugeordneten Trageflansch (36). Zur Montage des Trageflanschs (36) ist eine Ausnehmung (94) vorgesehen, die an ihrem Rand eine motorseitige Schulter (96) hat, welche etwa nach Art eines Hohlkegelstumpfs ausgebildet und nach der Montage dem Motor (20) zugewandt ist. Der Trageflansch (36) ist zur Führung eines Rastelements (82) ausgebildet, das sich über mindestens einen Teil des Umfangs des Trageflanschs (36) erstreckt und durch eine nach innen gerichtete Beaufschlagung federnd radial nach innen auslenkbar ist. Das Rastelement (82) ist so ausgebildet, dass es, wenn der Motor montiert ist, an der motorseitigen Schulter (96) der genannten Ausnehmung (94) einrastet.

## Beschreibung

Die Erfindung betrifft eine Anordnung mit einem Elektromotor, und insbesondere mit einem sogenannten Miniaturmotor (Klein- oder Kleinstmotor).

Derartige Miniaturmotoren werden für verschiedene Aufgaben verwendet, z.B. zum Antrieb von Klein- oder Kleinstlüftern, zum Antrieb von Pumpen, beispielsweise in medizinischen Geräten, als Stellmotoren, etc. Ein solcher Motor kann z.B. ein Gewicht im Bereich von etwa 50 bis etwa 250 g haben.

Wegen ihrer relativ kleinen Leistungen sind solche Motoren empfindlich gegen Verschmutzung, wie sie z.B. in einer Waschmaschine häufig vorkommen kann, und man strebt deshalb an, solche Motoren in einem abgedichteten Raum so anzuordnen, dass kein Schmutz zu ihnen gelangen kann. Dies gilt besonders bei Motoren, die einen permanentmagnetischen Rotor verwenden, weil ein solcher Rotor Eisenpartikel anzieht, welche die Drehung des Rotors blockieren oder behindern können.

Solche kleinen Motoren haben meist einen Flansch, den man auch als Trageflansch bezeichnet. Es ist üblich, einen solchen Motor dadurch zu befestigen, dass man seinen Flansch dort festschraubt, wo man den Motor braucht, z.B. zum Verriegeln einer Türe. Dies erfordert jedoch die Herstellung von Gewindebohrungen oder das Setzen von Gewindenieten für die Schraubbefestigung, was manchmal unerwünscht ist, weil solche Bohrungen eine Schwächung bewirken und nach einiger Zeit zu einem Dauerbruch führen können.

Es ist deshalb eine Aufgabe der Erfindung, eine neue Anordnung mit einem Elektromotor bereit zu stellen.

Nach der Erfindung wird diese Aufgabe gelöst durch den Gegenstand des Patentanspruchs 1.

Eine solche Anordnung ermöglicht eine "blinde" Montage, d.h. man kann einen solchen Motor einfach in die Ausnehmung der zugeordneten Vorrichtung schieben, wobei das Rastelement dort einrastet. Dabei befindet sich das Rastelement im gleichen geschützten Hohlraum wie der Motor, so dass das Rastelement, ebenso wie der Motor, vor Verschmutzung und Korrosion geschützt ist und im Bedarfsfall leicht wieder gelöst werden kann.

Weitere Einzelheiten und vorteilhafte Weiterbildungen der Erfindung ergeben sich aus den im folgenden beschriebenen und in der Zeichnung dargestellten, in keiner Weise als Einschränkung der Erfindung zu verstehenden Ausführungsbeispielen, sowie aus den Unteransprüchen. Es zeigt:
- Fig. 1: eine Draufsicht auf einen Kleinmotor 20, der an einer nur symbolisch angedeuteten Vorrichtung befestigt ist, gesehen in Richtung des Pfeiles 1 der Fig. 2,
- Fig. 2: eine Seitenansicht, gesehen in Richtung des Pfeiles II der Fig. 1, wobei Fig. 2 den Motor nach seiner Befestigung an einer nur schematisch angedeuteten Vorrichtung zeigt und der Motor ein ebenfalls nur symbolisch angedeutetes Gerät 48 antreibt, z.B. eine Wasserpumpe oder eine Stellvorrichtung,
- Fig. 3: einen Schnitt, gesehen längs der Linie III-III der Fig. 2, in stark vergrößertem Maßstab,
- Fig. 4: eine perspektivische Darstellung des Stators beim Motor nach den Fig. 1 bis 3, also vor der Montage des Außenrotors,
- Fig. 5: eine Draufsicht auf den montierten Motor, gesehen in Richtung des Pfeiles V der Fig. 2, in einem gegenüber Fig. 1 und 2 vergrößerten Maßstab,
- Fig. 6: die Darstellung einer Einzelheit, die in Fig. 5 mit VI bezeichnet ist,
- Fig. 7: einen Schnitt, gesehen längs der Linie VII-VII der Fig. 5,
- Fig. 8: eine vergrößerte Darstellung der in Fig. 7 mit X bezeichneten Einzelheit, jedoch vor der Montage, also abweichend von Fig. 7,
- Fig. 9: eine vergrößerte Darstellung analog Fig. 8, aber während der Montage, also abweichend von Fig. 7 und 8,
- Fig. 10: eine vergrößerte Darstellung der in Fig. 7 mit X bezeichneten Einzelheit, also nach Abschluss der Montage,
- Fig. 11: einen Schnitt, gesehen längs der Linie XI-XI der Fig. 5,
- Fig. 12: eine vergrößerte Darstellung einer Einzelheit, die in Fig. 11 mit XII bezeichnet ist und eine Ausführungsform einer im Trageflansch vorgesehenen Sollbruchstelle zeigt, mit deren Hilfe eine Öffnung aus dem Trageflansch herausgebrochen werden kann, und
- Fig. 13: eine bevorzugte Variante des verwendeten Sprengrings.

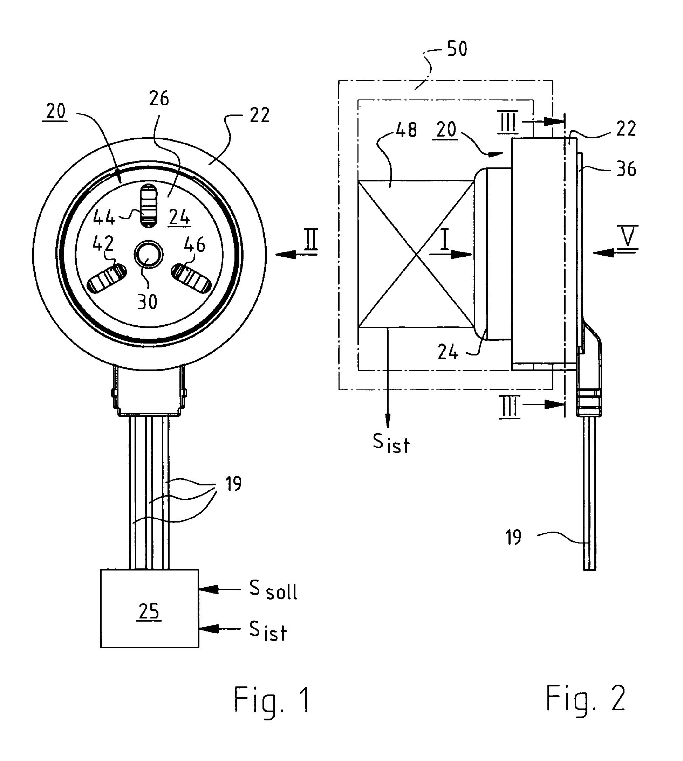

**Fig. 1** und **Fig. 2** zeigen etwa im Maßstab 1 : 1 einen Außenläufer-Kleinmotor 20, der in einem Ring 22 befestigt ist, welcher eine beliebige Vorrichtung symbolisiert. Der Motor 20 ist bei diesem Beispiel ein dreiphasiger Motor in Stern- oder Dreieckschaltung, der zu seinem Antrieb über drei Leitungen 19 mit einem dreiphasigen Strom (Drehstrom) versorgt wird, z.B. aus einem elektronischen Lageregler 25, dem ein Sollwert Ssoll und ein Istwert Sist für eine gewünschte Lage zugeführt werden.

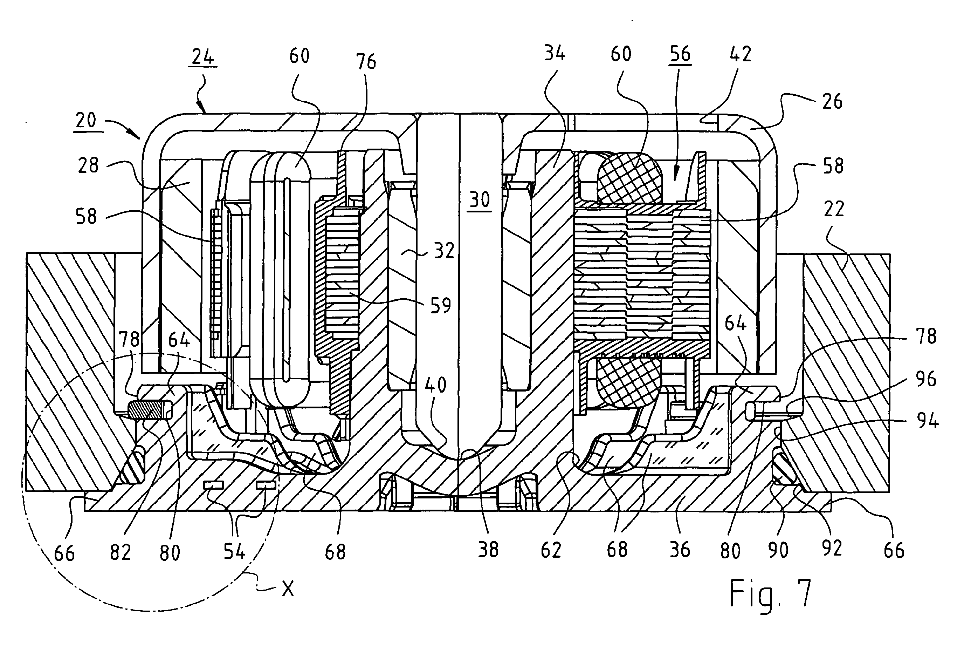

Der Motor 20 hat einen Außenrotor 24 mit einer sogenannten Rotorglocke 26 (Fig. 7) aus Kupfer, in der ein Magnetring 28 befestigt ist, welcher z.B. vierpolig magnetisiert ist. Solche Motoren werden von der Anmelderin hergestellt und sind bekannt.

Wie **Fig. 7** zeigt, ist an der Rotorglocke 26 eine Welle 30 befestigt, die in einem Gleitlager 32 gelagert ist, das seinerseits in einem Lagerrohr 34 durch Einpressen befestigt ist. Das Lagerrohr 34 ist einstückig mit einem Trageflansch 36 ausgebildet. Die Teile 34, 36 sind aus einem geeigneten hitzebeständigen Kunststoff hergestellt, z.B. aus Polypropylen.

In seiner Mitte hat der Trageflansch 36 eine Vertiefung 38, gegen welche die Welle 30 mit ihrem freien Ende 40 anliegt. Die Welle 30 wird durch die Kraft der Dauermagnete 28 gegen diese Vertiefung 38 gepresst, so dass dort ein Axiallager für den Außenrotor 24 gebildet wird, das mit einem (nicht dargestellten) Schmiermittel versehen ist.

Wie Fig. 1 zeigt, hat die Rotorglocke 26 drei längliche Ausnehmungen 42, 44, 46, die in Abständen von 120° in radialer Richtung verlaufen, vgl. Fig. 1. Sie dienen zur Kupplung mit einer beliebigen Vorrichtung 48, die in Fig. 2 schematisch angedeutet ist und durch den Motor 20 angetrieben werden soll. Fig. 2 zeigt auch ein geschlossenes Gehäuse 50, in dem sich die Vorrichtung 48 und der Hauptteil des Motors 20 befinden. Die Vorrichtung 48 liefert im Betrieb den Wert Sist für den Lageregler 25.

Dieses Gehäuse 50 ist nur schematisch dargestellt. Wichtig ist, dass es Schmutz vom Motor 20 und dem anzutreibenden Teil 48 fern hält, und dass die Montage des Motors 20 im Gehäuse 50 (dessen Teil der Ring 22 ist) schnell und sicher erfolgen kann. Dabei soll die Verbindung so sein, dass sie auch die mechanischen Kräfte aufnehmen kann, die durch den Betrieb des Motors 20 entstehen. Außerdem soll durch die Montage bevorzugt eine flüssigkeitsdichte Verbindung gebildet werden, und diese Verbindung sollte im Falle eines Defekts lösbar sein, z.B. zum Austausch des Motors 20 oder der Vorrichtung 48.

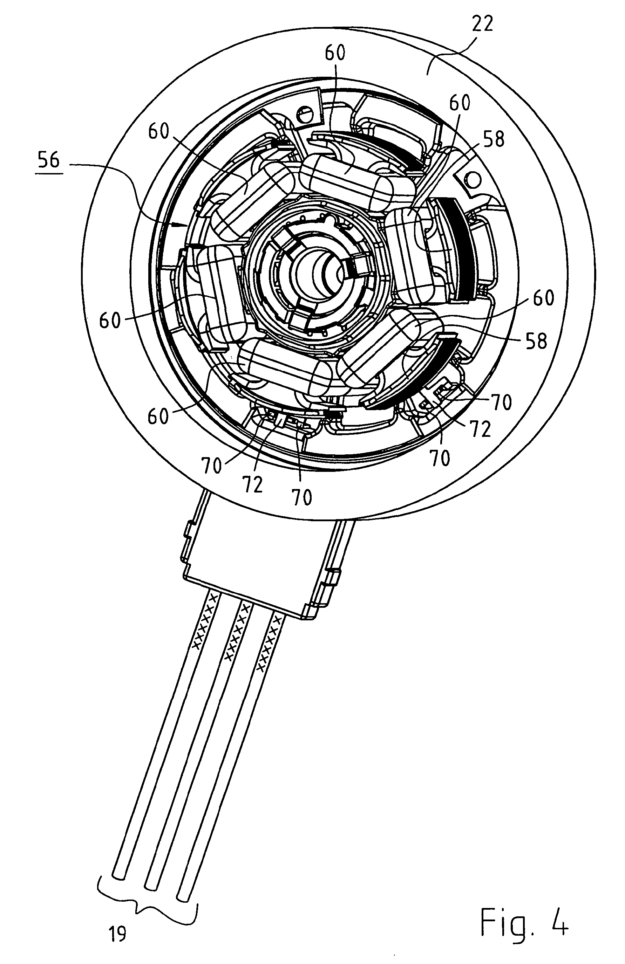

Fig. 7 zeigt, dass im Trageflansch 36 elektrische Leiter 54 eingebettet sind, die zur Verbindung von den Leitungen 19 (Fig. 1 und 2) zu einem Innenstator 56 dienen. Dieser hat sechs ausgeprägte Statorpole (salient poles) 58, deren Form am besten aus Fig 4 hervor geht. Auf jedem Pol 58 ist in bekannter Weise eine Spule 60 angeordnet. Diese Spulen 60 werden über die Leitungen 19 mit Strom versorgt. Die Statorpole 58 wirken im Betrieb in bekannter Weise mit den Magneten 28 des Rotors 24 zusammen, um den Rotor 24 anzutreiben.

Dadurch, dass die Mitte der axialen Erstreckung des Rotormagneten 28 in Fig. 7 oberhalb der Mitte der axialen Erstreckung der Statorpole 58 liegt, entsteht eine ständige Kraft auf den Rotor 24, die diesen in Fig. 7 nach unten zieht und das Wellenende 40 gegen die Vertiefung 38 presst. Hierdurch wird vermieden, dass sich der Rotor 24 bei Erschütterungen im Lagerrohr 34 in axialer Richtung bewegt und "klappert". Es ist deshalb oft möglich, auf eine axiale Sicherung des Rotors 24 zu verzichten.

Die Spulen 60 ragen in Fig. 7 unten in eine rinnenartige Vertiefung 62 des Trageflanschs 36. An seiner Peripherie hat dieser einen bezogen auf Fig. 7 nach oben ragenden umlaufenden Rand 64. Ferner hat der Flansch 36 einen radial nach außen ragenden Randabschnitt 66.

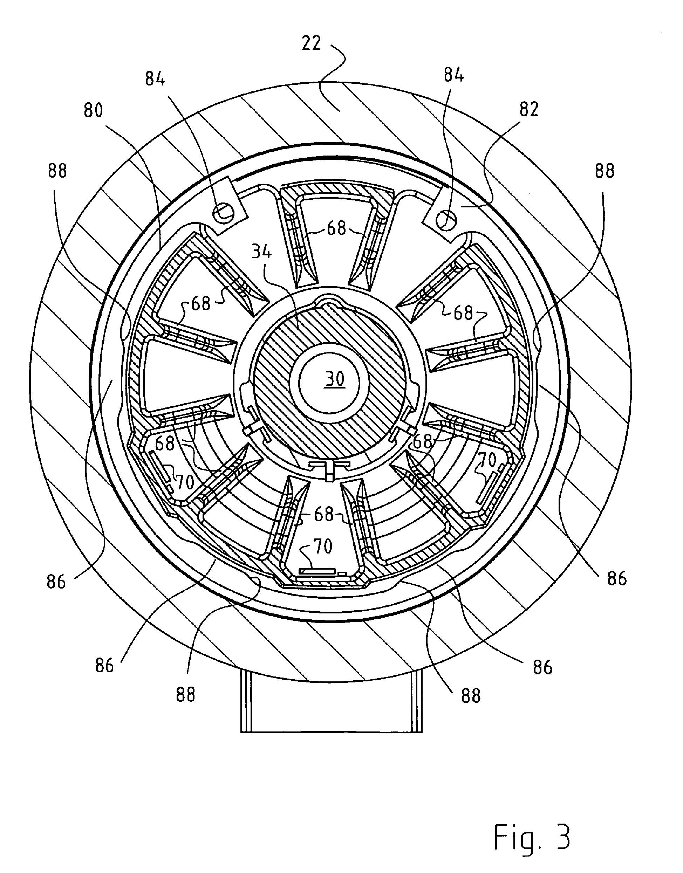

Zwischen dem Rand 64 und der Vertiefung 62 erstrecken sich zwölf radial verlaufende Versteifungsrippen 68, die gemäß Fig. 3 in regelmäßigen Abständen von 30° angeordnet sind und deren bevorzugte Form aus Fig. 7 klar hervor geht. Sie haben etwa das Profil eines Sessels.

Wie **Fig. 3** und **Fig. 4** zeigen, erstrecken sich zwischen benachbarten Verstärkungsrippen 68 elektrische Anschlusselemente 70, an denen jeweils eine Anschlussleitung 72 für eine der Spulen 60 befestigt ist. Insgesamt sind im Flansch 36 drei Anschlusselemente 70 befestigt, die mit den Leitungen 19 elektrisch verbunden sind.

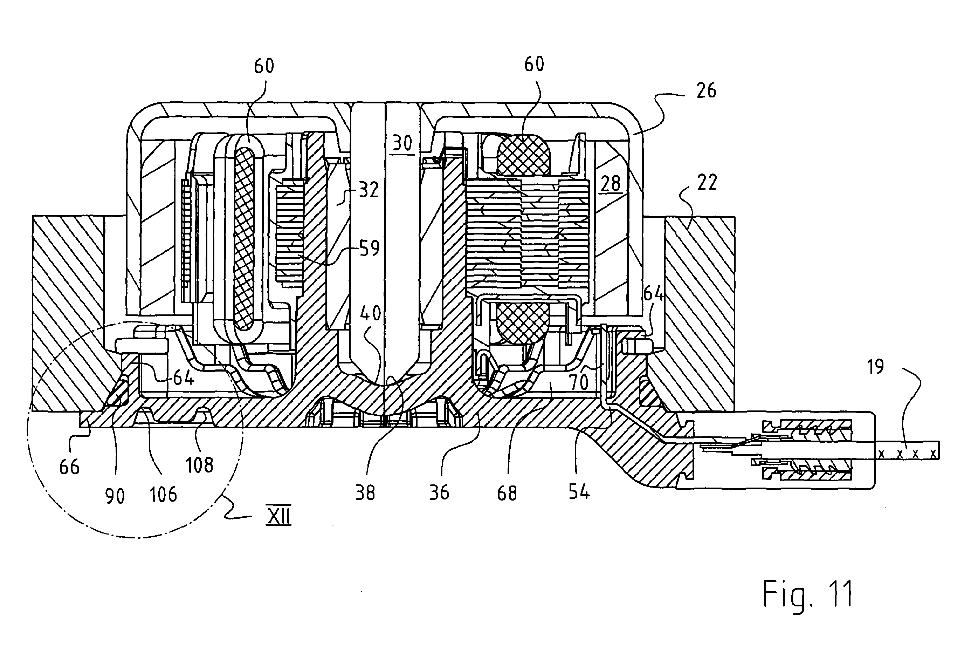

**Fig. 11** zeigt den Verlauf eines der Anschlusselemente 54, 70 im Flansch 36. So wird in sehr einfacher Weise und ohne Mehrkosten verhindert, dass im Bereich dieser Anschlusselemente Flüssigkeit in den Motor 20 eindringen kann.

Die Statorpole 58 sind Teile eines Stator-Blechpakets 59, das in der in Fig. 7 dargestellten Weise auf die Außenseite 74 des Lagerrohres 34 aufgepresst ist. Das Blechpaket 59 ist gemäß Fig. 7 mit einer isolierenden Schicht 76 versehen, die als Spulenkörper für die Spulen 60 dient.

An der äußeren Peripherie 78 des nach oben ragenden Randes 64 des Flanschs 36 ist eine ringnutartige Ausnehmung 80 vorgesehen, in der ein federndes Rastelement 82 angeordnet ist, dessen Form am besten aus Fig. 3 hervor geht. Es hat etwa die Form eines C, bzw. eines Kreises, der an einer Stelle unterbrochen ist. Es ist aus federndem Material hergestellt, gewöhnlich aus Stahl und kann sich relativ zur Nut 80 innerhalb vorgegebener Grenzen bewegen.

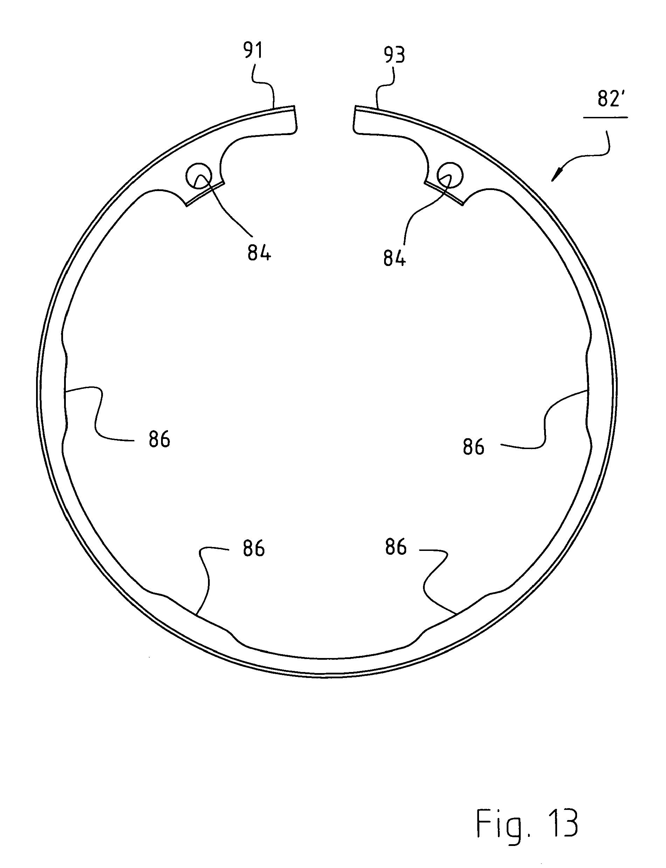

**Fig. 13** zeigt eine Variante 82' dieses Rastelements, die für manche Anwendungen Vorteile hat.

Wie Fig. 3 zeigt, hat das federnde Rastelement zwei Betätigungsöffnungen 84, in welche ein (nicht dargestelltes) Werkzeug eingeführt werden kann, um diese Betätigungsöffnungen 84 in Richtung zueinander zu bewegen, wie das beim Öffnen der Verrastung notwendig ist, vgl. die nachfolgende Beschreibung.

Das Rastelement 82 hat, ebenso wie das Rastelement 82' der Fig. 13, vier Verbreiterungen 86, die radial nach innen ragen. Die ringnutartige Ausnehmung 80 hat entsprechende Vertiefungen 88, in welche diese Verbreiterungen 86 eingreifen und dadurch das Rastelement 82 (bzw. 82') an einer Drehung in der Ausnehmung 80 hindern. Dies ist deshalb von Vorteil, weil für den Zugang zu den Betätigungsöffnungen 84 spezielle Öffnungen des Flanschs 36 durchstoßen werden müssen, und wenn man diese Öffnungen durch Zerbrechen einer Sollbruchstelle hergestellt hat, müssen sich direkt hinter ihnen die Betätigungsöffnungen 84 befinden, damit an ihnen ein Werkzeug angesetzt werden kann.

Bei Fig. 13 hat das Rastelement 82' zusätzlich im Bereich der linken Öffnung 84 eine Verlängerung 91 nach rechts, und im Bereich der rechten Öffnung 84 eine Verlängerung 93 nach links. Die Verlängerungen 91, 93 sind ebenfalls in der Ausnehmung 80 geführt. Es hat sich gezeigt, dass eine solche zusätzliche Führung im Bereich der Öffnungen 84 in manchen Fällen vorteilhaft sein kann.

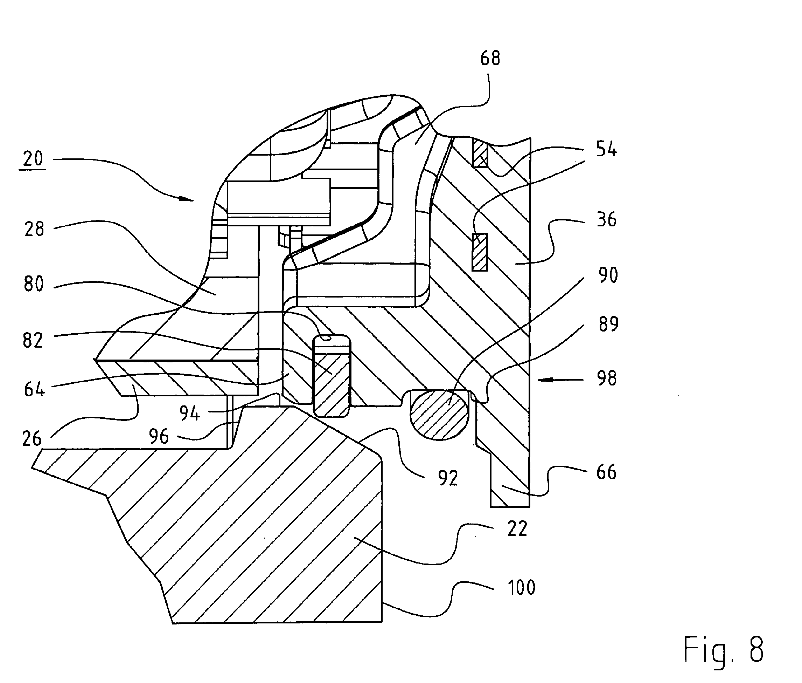

Auf dem Außenumfang des Trageflansches 36 ist gemäß Fig. 7 in einer Ringnut 89 ein elastisches Dichtglied 90 angeordnet, z.B. ein O-Ring. Auch hat der Ring 22 auf seiner vom Motor 20 abgewandten Seite die Form eines Hohlkegelstumpfs 92, der sich in Richtung vom Motor 20 weg erweitert. Zum Motor 20 hin geht dieser Hohlkegelstumpf 92 in einen zylindrischen Abschnitt 94 (Fig. 8) über, an den sich ein zweiter Hohlkegelstumpf anschließt, der eine schräge Schulter 96 bildet, deren Durchmesser sich zum Motor 20 hin erweitert.

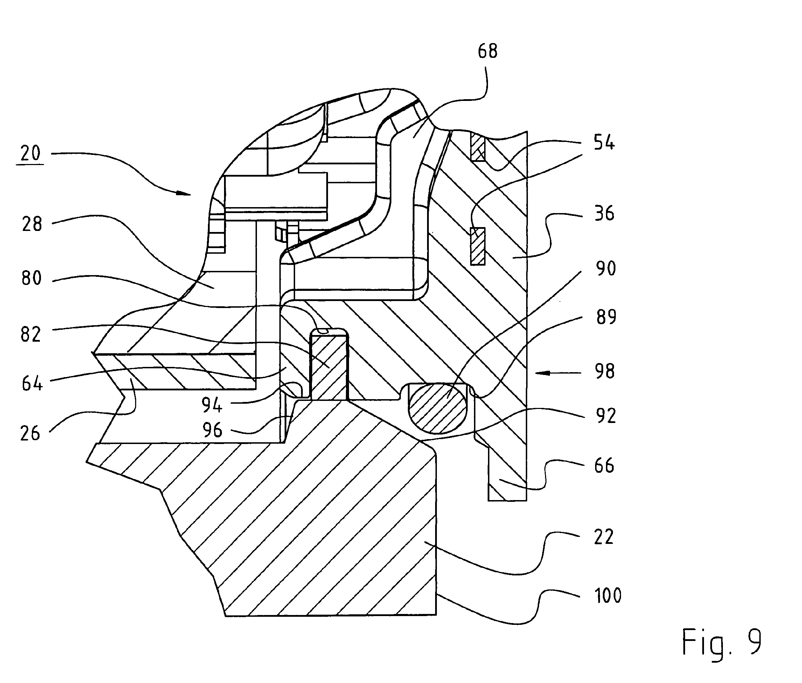

Die Fig. 8 bis 10 zeigen den Ablauf bei der Montage. Gemäß **Fig. 8** wird der Trageflansch 36 mit dem daran befestigten Motor 20 in Richtung eines Pfeiles 98 in die zylindrische Ausnehmung 94 des Rings 22 eingeführt. Hierbei wird der federnde Ring 82 durch den Kontakt mit dem Hohlkegelstumpf 92 in radialer Richtung so weit zusammengepresst, bis er gemäß **Fig. 9** in die zylindrische Ausnehmung 94 passt und durch diese geschoben werden kann.

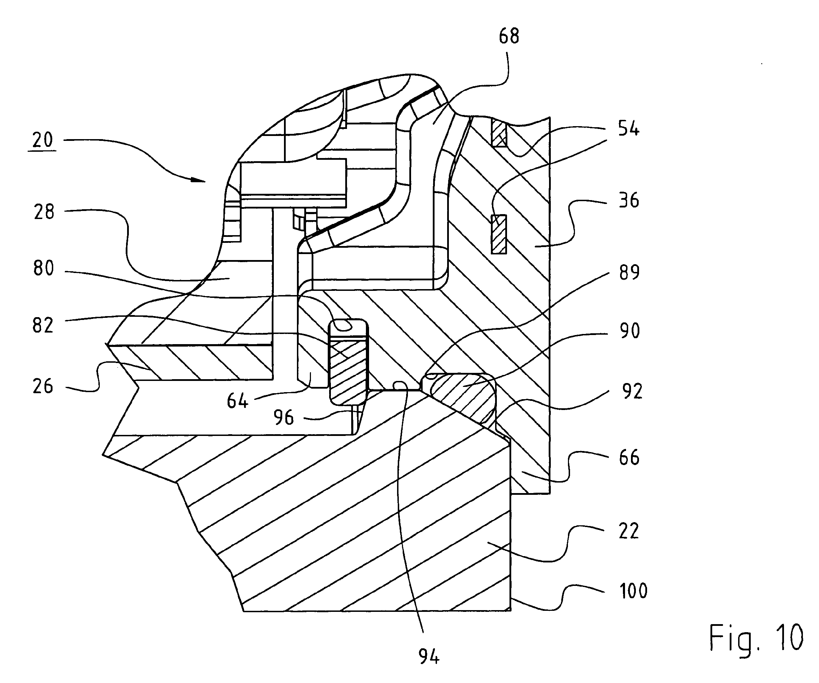

Dabei gelangt der federnde Ring 82 schließlich in die Lage gemäß **Fig. 10**. Hier kann sich der federnde Ring 82 wieder teilweise entspannen und legt sich mit Vorspannung gegen die schräge Schulter 96. Gleichzeitig wird hierbei der Dichtring 90 zwischen der Ringnut 89 und dem Hohlkegelstumpf 92 zusammen gepresst und bildet so eine sichere Dichtung. Auch legt sich der Flanschabschnitt 66 gegen die ebene Stirnseite 100 des Rings 22, oder bildet mit ihr einen geringen Spalt. Das Spannglied 82 hält durch seine Federwirkung eine Axialkraft auf das elastische Dichtglied 90 aufrecht. Diese axiale Kraft bewirkt auch einen festen Halt des Flanschs 36 in der Ausnehmung 94 und verhindert, dass der Flansch 36 in der Ausnehmung 94 wackelt.

Eine solche Anordnung ermöglicht also eine "blinde" Montage des Motors 20 am Ring 22, die sehr schnell abläuft, da nach der Montage nur noch die Leitungen 19 angeschlossen werden müssen, was gewöhnlich mittels eines (nicht dargestellten) Steckers geschieht. Eine solche Befestigung ist sehr sicher und kann sich nicht von selbst lösen. Auch hält sie den Dichtring 90 ständig unter Spannung, und sie ist fluiddicht, so dass die Teile innerhalb des Gehäuses 50 (Fig. 2) nicht verschmutzen. Dazu trägt bei, dass der Motor 20 keinen Kollektor und keine Kohlebürsten hat.

Sehr vorteilhaft ist auch, dass sich der federnde Ring 82 bzw. 82' innerhalb des Gehäuses 50 befindet und deshalb nicht korrodieren kann. In manchen Fällen ist es nämlich notwendig, den Motor 20 für eine Reparatur oder auch nur eine Inspektion zu entfernen.

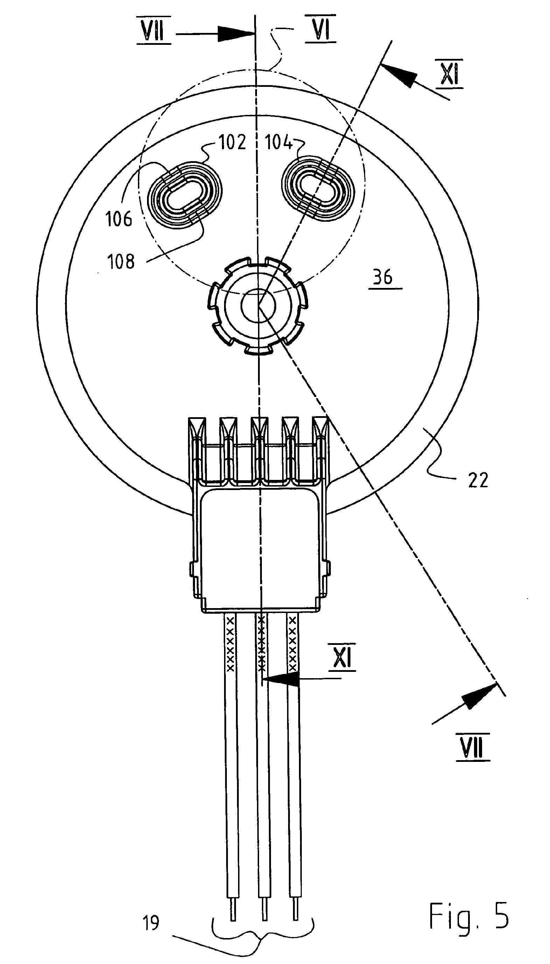

Zu diesem Zweck hat der Trageflansch 36 im Bereich der Öffnungen 84 des elastischen Rings 82 Stellen 102, 104 (Fig. 5), die längs Sollbruchstellen heraus gebrochen werden können. Dadurch entstehen dann zwei (nicht dargestellte) Öffnungen, durch welche ein Werkzeug in die Öffnungen 84 des elastischen Rings 82 eingeführt werden kann. Hiermit wird der Ring 82 im Bereich seiner Öffnungen 84 zusammen gepresst, so dass er sich von der frustokonischen Schulter 96 löst, und der Motor 20 durch die zylindrische Ausnehmung 94 heraus gezogen werden kann.

Wenn sich heraus stellt, dass der Motor 20 in Ordnung ist, können die Öffnungen, die in den Flansch 36 gebrochen wurden, behelfsmäßig verschlossen werden, und man kann den Motor 20 erneut montieren. Anschließend muss man bei Gelegenheit den Motor 20 durch einen anderen Motor mit intaktem Flansch 36 ersetzen.

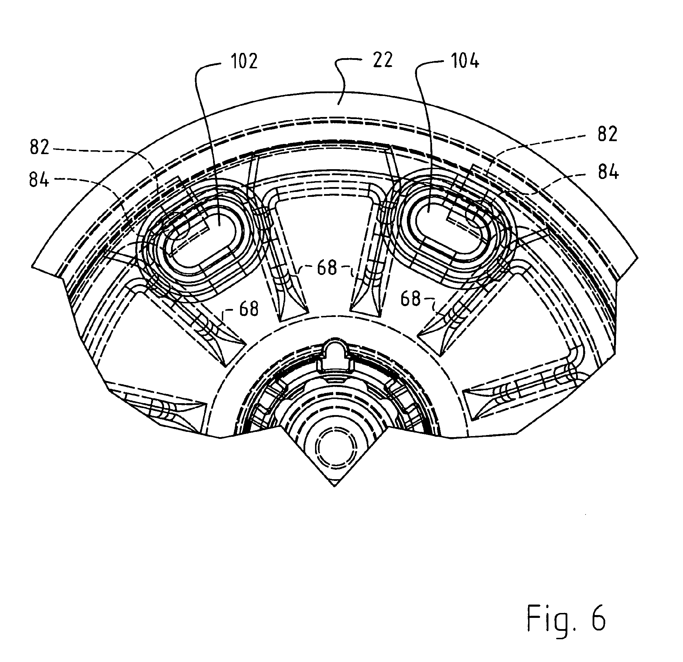

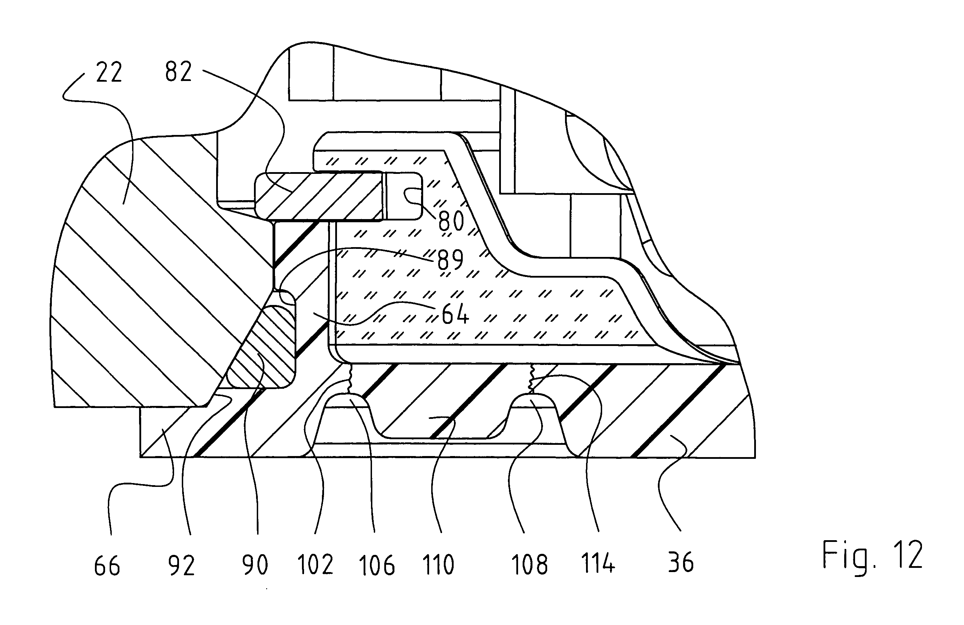

**Fig. 11** und **Fig. 12** zeigen am Flansch 36 zwei rinnenartige Vertiefungen 106, 108, deren Lage am Flansch aus den Fig. 5 und Fig. 6 hervor geht. Zwischen diesen Vertiefungen liegt ein dickerer Abschnitt 110, und durch Druck auf diesen kann der Abschnitt 110 längs Sollbruchlinien 112, 114 heraus gebrochen werden, wodurch die beschriebene Öffnung entsteht.

**Fig. 6** zeigt die Lage der Stellen 102, 104 relativ zu den radialen Versteifungsrippen 68 und den Öffnungen 84 des Sprengrings 82. Die Öffnungen 84 liegen nach der Montage jeweils zwischen zwei Versteifungsrippen 68, ebenso die Stellen 102, 104.

Naturgemäß sind im Rahmen der vorliegenden Erfindung vielfache Abwandlungen und Modifikationen möglich.

## Patentansprüche

1. Anordnung mit einem Elektromotor nach Art eines Klein- oder Kleinstmotors, welcher Motor (20) einen Stator (56), einen Rotor (24) und einen dem Motor zugeordneten Trageflansch (36) aufweist, der zur Befestigung in einer Ausnehmung (94) ausgebildet ist, welche eine motorseitige Schulter (96) aufweist, die nach Art eines Hohlkegelstumpfes ausgebildet und nach der Montage dem Motor (20) zugewandt ist,
wobei der Trageflansch (36) zur Führung eines Rastelements (82; 82') ausgebildet ist,
das sich über mindestens einen Teil des Umfangs des Trageflanschs (36) erstreckt,
durch eine nach innen gerichtete Beaufschlagung federnd radial nach innen auslenkbar ist,
und das so ausgebildet ist, dass es nach Montage des Trageflansches (36) in der Ausnehmung (94) an der motorseitigen Schulter (96) dieser Ausnehmung (94) einrastet.

2. Anordnung nach Anspruch 1, bei welcher der Trageflansch (36) mit einem radialen Vorsprung (66) versehen ist, welcher so ausgebildet ist, dass er nach der Montage gegen eine motorabgewandte Seite (100) des Randes der Ausnehmung (94) anliegt oder sich in deren Nähe befindet.

3. Anordnung nach Anspruch 1 oder 2, bei welcher das Rastelement nach Art eines Sprengrings (82; 82') ausgebildet ist.

4. Anordnung nach Anspruch 1 oder 2, bei welcher das Rastelement (82; 82') nach Art eines Keilrings ausgebildet ist.

5. Anordnung nach einem der vorhergehenden Ansprüche, bei welcher das Rastelement (82; 82') mit mindestens einer Eingriffsöffnung (84) für den Eingriff eines Betätigungswerkzeugs versehen ist.

6. Anordnung nach Anspruch 5, bei welcher das Rastelement (82; 82') etwa die Form eines C hat und an jedem Schenkel des C mit einer Eingriffsöffnung (84) versehen ist.

7. Anordnung nach Anspruch 5 oder 6, bei welcher der Trageflansch (36) mit mindestens einer Sollbruchstelle (112, 114) versehen ist, durch deren Zerbrechen eine Öffnung herstellbar ist, durch welche hindurch eine Eingriffsöffnung (84) des Rastelements (82; 82') zugänglich ist.

8. Anordnung nach Anspruch 7, bei welcher der Trageflansch (36) an mindestens zwei Stellen (102, 104) mit Sollbruchstellen (112, 114) versehen ist, welche die Herstellung von zwei Öffnungen für den Zugang zu zwei Eingriffsöffnungen (84) des Rastelements (82; 82') ermöglichen.

9. Anordnung nach einem der vorhergehenden Ansprüche, bei welcher zur Anordnung zwischen dem Umfang des Trageflanschs (36) und der Ausnehmung (94) ein Dichtelement (90) vorgesehen ist.

10. Anordnung nach Anspruch 9, bei welcher das Dichtelement nach Art eines O-Rings (90) ausgebildet und in einer Nut (89) am Umfang des Trageflanschs (36) angeordnet ist.

11. Anordnung nach Anspruch 9 oder 10, bei welcher das Dichtelement (90) als elastisches Teil ausgebildet ist, welches so ausgebildet ist, dass es durch die Anlage des Rastelements (82: 82') gegen die motorseitige Schulter (96) der Ausnehmung (94) mit einer Vorspannung beaufschlagbar ist.

12. Anordnung nach einem der vorhergehenden Ansprüche, bei welcher das Rastelement (82; 82') als radial federndes Teil ausgebildet ist.

13. Anordnung nach Anspruch 12, bei welcher das radial federnde Teil (82; 82') mit radial nach innen ragenden Vorsprüngen (86) versehen ist, welche mit entsprechenden Vertiefungen (88) einer zur Aufnahme des Rastelements (82; 82') vorgesehenen Ausnehmung (80) in Eingriff stehen.

14. Anordnung nach Anspruch 13, bei welcher die zur Aufnahme des radial federnden Teils (82; 82') vorgesehene Ausnehmung mindestens bereichsweise nach Art einer Ringnut (80) ausgebildet ist.

15. Anordnung nach einem der vorhergehenden Ansprüche, bei welcher die zur Aufnahme des Trageflansches (36) vorgesehene Ausnehmung (94) auf ihrer zur Einführung des Trageflanschs (36) dienenden Seite etwa nach Art eines Hohlkegelstumpfes (92) ausgebildet ist.

16. Anordnung nach einem der vorhergehenden Ansprüche, bei welcher der Elektromotor als Außenläufermotor (20) mit einem Außenrotor (24) und einem Innenstator (56) ausgebildet ist, welch letzterer am Trageflansch (36) befestigt ist.

17. Anordnung nach Anspruch 16, bei welcher der Außenrotor (24) eine Welle (30) aufweist,
und am Trageflansch (36) ein Lagerrohr (34) angeordnet ist, in welchem diese Welle (30) gelagert ist.

18. Anordnung nach Anspruch 17, bei welcher das Lagerrohr (34) einstückig mit dem Trageflansch (36) ausgebildet und an seinem dem Trageflansch (36) zugewandten Ende fluiddicht verschlossen ist.

19. Anordnung nach einem der Ansprüche 16 bis 18, bei welcher der Innenstator (56) den Außenrotor (24) durch eine magnetische Kraft in Richtung zum Trageflansch (36) zieht.

20. Anordnung nach Anspruch 19, bei welcher zur Erzeugung der magnetischen Kraft mindestens ein Permanentmagnet (28) des Außenrotors (24) relativ zu ferromagnetischen Elementen (59) des Innenstators (56) axial versetzt ist.
